# EUROPÄISCHE PATENTSCHRIFT

(11) **EP 1 318 036 B1**
(45) Veröffentlichungstag und Bekanntmachung des Hinweises auf die Patenterteilung: **24.09.2008**
(21) Anmeldenummer: 02025461.1
(22) Anmeldetag: 15.11.2002
(51) Int. Cl.: B60G 21/05

(54) **Verfahren zur Herstellung eines Querträgers**
Process for manufacturing a cross-beam
Procédé pour la fabrication d'une traverse

(30) Priorität: 08.12.2001 DE 10160352
(43) Veröffentlichungstag der Anmeldung: 11.06.2003
(73) Patentinhaber: Benteler Automobiltechnik GmbH, 33104 Paderborn (DE)
(72) Erfinder: Herzig, Georg, 33154 Salzkotten (DE)
(74) Vertreter: Ksoll, Peter

(56) Entgegenhaltungen:
- EP-A- 1 036 678
- EP-A- 1 134 047
- US-A- 5 507 518

## Beschreibung

Die Erfindung betrifft ein Verfahren zur Herstellung eines Querträgers für Verbundlenkerachsen von Kraftfahrzeugen.

Verbundlenkerachsen weisen einen biegesteifen und torsionsweichen Querträger auf, welcher an jedem Ende mit einem Längslenker verbunden ist. Die Längslenker nehmen an einem Ende einen Radträger auf und sind mit ihrem anderen Ende am Fahrzeugaufbau angebunden.

Im Stand der Technik sind verschiedene Vorschläge bekannt, wie der Querträger einer Verbundlenkerachse ausgestaltet sein kann, um diese auf der einen Seite biegesteif, auf der anderen Seite aber auch ausreichend torsionsweich zu gestalten. In diesem Zusammenhang offenbart die DE 44 16 725 A1 einen Querträger, der über die gesamte Länge aus einem Rohrprofil besteht, das an beiden Enden einen torsionssteifen Querschnitt und im mittleren Bereich einen torsionsweichen U-, V-, L-, X- oder ähnlichen Querschnitt mit mindestens einem doppelwandigen Profilschenkel aufweist.

Im Umfang der FR 2 654 987 A1 ist eine Verbundlenkerachse bekannt, die ebenfalls einen im Querschnitt V-förmigen Querträger aufweist. Der Querträger ist über U-förmige Übergangsstücke mit den Längslenkern verschweißt.

Bei der aus der DE 27 40 948 A1 bekannten Verbundlenkerachse ist der Querträger aus zwei aufeinander liegenden und sich kontaktierenden Schalen zusammengesetzt, die untereinander verschweißt sind.

Durch die DE 198 46 399 A1 zählt eine Verbundlenker-Hinterachse zum Stand der Technik mit einem Querträger, in dem ein Stabilisator in Form einer Blecheinlage angeordnet ist, so dass eine bestimmte Torsionssteifigkeit des Querträgers gewährleistet werden kann.

Als nächster Stand der Technik wird eine Verbundlenkerachse nach EP 1 036 678 A angesehen.

Die bekannten Verbundlenkerachsen bzw. deren Querträger sind auf einem hohen technischen Stand angelangt. Heute liegt die Strategie der Fahrzeugentwicklung in einer möglichst effizienten Gewichtseinsparung bei gleichzeitiger Verbesserung von Fahrzeugsicherheit, Fahreigenschaften und Komfort. Es werden daher Fertigungstechnologien gefordert, mit denen bestmögliche Produkteigenschaften und konstruktive Lösungen realisiert werden können, und die gleichzeitig eine kostengünstige Bauteilproduktion gewährleisten.

Der Erfindung liegt daher ausgehend vom Stand der Technik die Aufgabe zugrunde, ein Verfahren zur Herstellung eines Querträgers für Verbundlenkerachsen von Kraftfahrzeugen aufzuzeigen, welches einen leistungsfähigen Querträger in einer kostengünstigen leichten Bauweise liefert.

Die Lösung dieser Aufgabe besteht nach der Erfindung in einem Verfahren gemäß den Maßnahmen von Patentanspruch 1.

Danach wird ein Metallband im Durchlauf in einer Profilieranlage derart zu einem V- oder U-förmigen doppelwandigen Hohlprofil geformt, dass mindestens im Scheitelbereich des Hohlprofils die Außenwand im Abstand zur Innenwand verläuft und sich die Längskanten im Scheitelbereich der Außenwand erstrecken. Die Längskanten werden dann durch eine Längsschweißnaht gefügt und anschließend geglättet. Von diesem geschweißten Hohlprofil werden die Querträger auf Länge abgeteilt.

Die erfindungsgemäße Vorgehensweise ist rationell und produktionstechnisch kostengünstig. Aufgrund des hohlen Doppelprofils ist der Materialeinsatz und damit auch das Gewicht minimiert. Das erfindungsgemäße Verfahren kann sowohl für die Fertigung von Querträgern aus Stahlblechen als auch aus Aluminiumblechen oder anderen geeigneten metallischen Werkstoffen angewandt werden.

Auch kann die Wanddicke der eingesetzten Metallbleche entsprechend der geforderten Rollratensteifigkeit einer Verbundlenkerachse gewählt werden.

Das der Profilieranlage zugeführte Metallband kann von einem Coil abgezogen oder als bereits ebene Platine der Profilieranlage zugeführt werden.

Der Schweißvorgang des Hohlprofils erfolgt voll automatisch ebenso wie die anschließende Nachbearbeitung der Längsschweißnaht in einer Linie ohne ein Zwischenhandling der Bauteile.

Gemäß der den grundsätzlichen Erfindungsgedanken vorteilhaft weiterbildenden Maßnahme von Patentanspruch 2 ist vorgesehen, dass die Außenwand und die Innenwand im Scheitelbereich mit einem Abstand zueinander angeordnet werden, der ein Mehrfaches der Blechdicke beträgt.

Für die Praxis ist davon auszugehen, dass der Abstand zwischen Außenwand und Innenwand mindestens 10 mm betragen sollte. Diese Maßnahme unterstützt die Fertigung vorteilhaft, da die Längsnahtverschweißung des Hohlprofils somit gut zu automatisieren ist. Auch kann die vom Hohlprofil eingeschlossene Fläche gezielt auf kraftfahrzeugtypische Anforderungen eingestellt bzw. je nach Kraftfahrzeug variiert werden. Hierdurch ist die Einstellung der Roll- bzw. Torsionssteifigkeit des Querträgers möglich. Damit kann die Rollsteifigkeit im kraftfahrzeugtypischen Maß bestimmt werden, ohne das Gewicht der Verbundlenkerachse nachteilig zu erhöhen. Das Verfahren liefert einen effizienten torsionssteifen, aber leichten Querträger.

Die Erfindung ist nachfolgend noch anhand eines Ausführungsbeispiels beschrieben, welches einen vertikalen Schnitt durch einen Querträger zeigt.

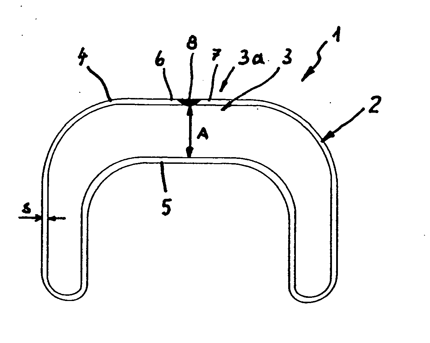

Die beiliegende Zeichnung zeigt einen Querträger 1 für Verbundlenkerachsen von Kraftfahrzeugen im Vertikalschnitt. Der Querträger 1 weist einen doppelwandigen U-förmigen Querschnitt auf und kann aus einem Stahlblech oder aber auch aus einem Leichtmetallblech, wie Aluminium, bestehen.

Zur Herstellung des Querträgers 1 wird ein Metallband im Durchlauf in einer Profilieranlage zu einem U-förmigen doppelwandigen Hohlkörper 2 umgeformt. Hierbei wird zumindest im Scheitelbereich 3 des Hohlprofils 2 ein Abstand A zwischen der Außenwand 4 und der Innenwand 5 des Hohlprofils 2 eingehalten, der ein Mehrfaches der Blechdicke s beträgt. In der Praxis sollte der Abstand A mindestens 10 mm betragen.

Die Längskanten 6, 7 des zum Hohlprofil 2 umgeformten Metallblechs erstrecken sich im Scheitelbereich 3a der Außenwand 4. Das so umgeformte Hohlprofil 2 wird dann entlang der Längskanten 6, 7 durch eine Längsschweißnaht 8 gefügt. Anschließend wird die Längsschweißnaht 8 geglättet und das immer noch als Strang vorliegende geschweißte Hohlprofil 2 gegebenenfalls weiteren Oberflächenbearbeitungsmaßnahmen unterzogen, bevor von dem geschweißten Hohlprofil 2 Querträger 1 in der erforderlichen Länge abgeteilt werden.

### Bezugszeichenaufstellung

- 1 -: Querträger
- 2 -: Hohlprofil
- 3 -: Scheitelbereich v. 2
- 3a -: Scheitelbereich v. 4
- 4 -: Außenwand v. 2
- 5 -: Innenwand v. 2
- 6 -: Längskante
- 7 -: Längskante
- 8 -: Längsschweißnaht

- A -: Abstand
- s -: Blechdicke

## Patentansprüche

1. Verfahren zur Herstellung eines Querträgers für Verbundlenkerachsen von Kraftfahrzeugen, wobei ein Metallband im Durchlauf in einer Profilieranlage derart zu einem V- oder U-förmigen doppelwandigen Hohlprofil (2) umgeformt wird, wobei mindestens im Scheitelbereich (3) des Hohlprofils (2) die Außenwand (4) im Abstand (A) zur Innenwand (5) verläuft und sich die Längskanten (6, 7) des umgeformten Metallbands im Scheitelbereich (3a) der Außenwand (4) erstrecken, worauf die Längskanten (6, 7) durch eine Längsschweißnaht (8) gefügt werden, dann die Längsschweißnaht (8) geglättet wird **dadurch gekennzeichnet, daß** anschließend von dem geschweißten Hohlprofil (2) Querträger auf Länge abgeteilt werden.

2. Verfahren nach Anspruch 1, **dadurch gekennzeichnet, dass** die Außenwand (4) und die Innenwand (5) im Scheitelbereich (3) mit einem Abstand (A) zueinander angeordnet werden, der ein Mehrfaches der Blechdicke (s) beträgt.

## Claims

1. Method for the production of a cross member for twist-beam rear axles of motor vehicles, wherein a metal strip is deformed during passage through a profiling system so as to form a V- or U-shaped, double-walled hollow profile (2), wherein the outer wall (4) runs at a distance (A) from the inner wall (5) at least in the apex region (3) of the hollow profile (2), and the longitudinal edges (6, 7) of the deformed metal strip extend in the apex region (3a) of the outer wall (4), whereupon the longitudinal edges (6, 7) are joined by a longitudinal weld seam (8), and then the longitudinal weld seam (8) is smoothed, **characterized in that** cross members are subsequently cut to length from the welded hollow profile (2).

2. Method according to Claim 1, **characterized in that** the outer wall (4) and the inner wall (5) are arranged in the apex region (3) at a distance (A) from each other that amounts to a multiple of the sheet-metal thickness (s).

## Revendications

1. Procédé pour la fabrication d'une traverse destinée à un essieu orientable composite de véhicule automobile, dans lequel une bande métallique est déformée lors de son passage dans une installation de profilage, de façon à former un profil creux (2) en forme de V ou en forme de U à double paroi, dans lequel au moins une zone apicale (3) du profil creux (2) de la paroi extérieure (4) s'étend à une certaine distance (A) par rapport à la paroi intérieure (5) et les bords longitudinaux (6, 7) de la bande métallique déformée s'étendent dans la zone apicale (3a) de la paroi extérieure (4), les bords longitudinaux (6, 7) étant assemblés par un cordon de soudure longitudinal (8), le cordon de soudure longitudinal (8) étant ensuite lissé, **caractérisé en ce que,** consécutivement, à partir du profilé creux soudé (2), des traverses sont découpées à longueur.

2. Procédé selon la revendication 1, **caractérisé en ce que** la paroi extérieure (4) et la paroi intérieure (5) au niveau de la zone apicale (3) sont disposées à une distance (A) entre elles, représentant un multiple de l'épaisseur de la tôle (s).
